Europäisches Patentamt

(19) European Patent Office

Office européen des brevets

(11) Publication number: **0 201 262**
**B1**

# EUROPEAN PATENT SPECIFICATION

(45) Date of publication of the patent specification:
10.01.90

(51) Int. Cl.⁴: **B23Q 7/14**, B23P 21/00,
B65G 37/02

(21) Application number: 86303216.5

(22) Date of filing: 28.04.86

(54) Automated product assembly system.

(30) Priority: 30.04.85 US 728923

(43) Date of publication of application:
17.12.86 Bulletin 86/46

(45) Publication of the grant of the patent:
10.01.90 Bulletin 90/2

(84) Designated Contracting States:
DE FR GB IT

(56) References cited:
EP-A- 0 013 733
EP-A- 0 121 438
FR-A- 2 507 521
FR-A- 2 508 362
US-A- 2 884 113
US-A- 3 781 974
US-A- 4 014 428
US-A- 4 035 904
US-A- 4 144 960
US-A- 4 237 598
US-A- 4 369 872

METALWORKING PRODUCTION, January 1985,
pages 45-50, London, GB; "Seiki-master of production
flexibility"
MACHINERY AND PRODUCTION ENGINEERING,

(73) Proprietor: International Business Machines
Corporation, Old Orchard Road, Armonk, N.Y. 10504(US)

(72) Inventor: Williams, Ronald C., 3519 Kendale Avenue,
Concord North Carolina 28025(US)
Inventor: Kendall, Barry L., 3307 Kendale Avenue,
Concord North Carolina 28025(US)
Inventor: Deaton, Franklin, 6003 Miller Road, Kannapolis
North Carolina 28081(US)
Inventor: Sedlak, Milton, 7119 Apple Creek Drive,
Charlotte North Carolina 28212(US)

(74) Representative: Atchley, Martin John Waldegrave, IBM
United Kingdom Limited Intellectual Property
Department Hursley Park, Winchester Hampshire
SO21 2JN(GB)

(56) References cited: (continuation)
vol. 143, no. 3662, 2nd January 1985, pages 37-42,
Burgess Hill, Sussex, GB; "Japan promotes cell
philosophy"
WERKSTATT UND BETRIEB, vol. 117, no. 1,
January 1984, pages 29-31, Munich, DE; M.
YAMAGUTSCHI: "Rechnergesteuerte Fabrik senkt
Materialbestand"

**Description**

The invention relates to an automated product assembly system, and in particular to an improved material handling apparatus for such a system which improves the ease with which various articles are moved within the system without impeding the movement of other articles.

Material handling is an important, and even crucial, part of the overall automation of a product manufacturing or assembly operation. Typically, a product assembly or manufacturing operation is carried out at a series of work stations, each work station being dedicated to one or a few functions which are required in order to complete the manufacturing operation. In a large number of instances the work stations may be automated.

Material handling functions forming part of a manufacturing or assembly operation require that different components be selectly delivered to different work stations at such a rate so as to eliminate the possibility that a work station is inoperative for lack of component parts. Typically components are delivered from areas dedicated for that purpose in carriers. Periodically the carriers become empty and they must be returned to a source of more components where they can be refilled and returned to the work stations.

In addition, the products, in the course of their assembly or manufacture, must also be delivered from work station to work station. After the final assembly or manufacturing step, the completed products must be removed from the final assembly area and directed to a packaging or shipping area. Typically each product, in the course of its assembly or manufacture, is supported on another carrier (pallet), and as a result these carriers, when empty, must be transported from the packaging or shipping area back to the assembly area for use in the manufacture or assembly of further products.

Thus the material handling system must deal with empty and full carriers for components, empty product carriers, carriers with partially completed products, and carriers with finished products. Because the manufacture or assembly operation is serial in nature (e.g. a first process or procedure must be completed before the next process or procedure can be begun), for efficient operation the time required to effect the different procedures along a serial production or assembly line should be balanced, for the overall line can operate no faster than the slowest unit in the line. Movement of partially or fully completed products is of the highest priority because any delay in that movement leads directly to a delay in the overall production rate. On the other hand, the movement of components carriers and empty product carriers cannot be ignored because these elements too are critical in producing the completed products.

The prior art arrangements provide a plurality of elements for the automated assembly facility, but do not describe how these elements can be coupled together to achieve the objectives of maximum through-put, flexibility, safety and inventory control, while minimising cost, space, labour, work in process and down time. Typical of the prior art arrangements are thus described in US-A 4 014 428; US-A 4 035 904; US-A 3 781 974; US-A 4 195 347 and US-A 4 237 598. These specifications each show a manufacturing operation wherein a plurality of work stations are arranged along a sequential production line. US-A 4 369 872 is specifically directed to an assembly facility and the conveyor line described therein transports workpieces. Workpieces are defined to include assembly parts and the pallets carrying the workpieces or assembly parts. US-A 2 884 113 also describes a manufacturing facility in which a conveyor carries both workpieces on which the operation or treatment has yet to be performed and workpieces upon which the operation or treatment has been completed.

Several of these Specifications describe the use of intermediate storage between two work stations. However, these Specifications do not show how the movement requirements of the various different items are prioritised so that the movement of partially completed products is not inhibited or impeded by the motion of full or empty component carriers, while at the same time ensuring that work stations are not shut down for the lack of required components. US-A 4 144 960 describes a production system where each work station has a location to store, off the conveyor line, a single unit of work, in addition to the work item actually being worked on.

Clearly, the various articles could be transported by dedicated, single purpose transporters. This approach is defective with regard to expense, space consumed and crowding the assembly stations. A plurality of single purpose transporters multiply cost and occupy an excessive amount of space, and bringing them together at each work or assembly station is difficult from two points of view. Firstly, it increases the assembly station area (additional space is consumed). Secondly, even if the assembly station is automated, access for an operator is required to clear jams, for maintenance, etc. and the collection of a large number of transporters impedes this access.

US-A 3 781 974 discloses an automated product manufacturing system which comprises a plurality of work stations for performing operations on a product, a source of components for use in the operations, and an output station for receiving final products. The system also includes a conveyor system for conveying carriers for the products as required between the source of components, the work stations and the output station. The conveyor system comprises a random storage facility located adjacent to the work stations for storing carriers and transfer means for transferring selected stored carriers from the random storage facility to selected work stations as required.

The object of the invention is to provide an improved automated product assembly system.

According to the invention an automated product assembly system comprises

a plurality of work stations for performing assembly operations on a product,

a source of components for use in the assembly operations,

an output station for receiving fully assembled products,

a plurality of component carriers and product carriers,

a random storage facility located adjacent to the work stations and including storage locations for storing component carriers holding components and empty product carriers and transport means for transporting carriers into selected storage locations,

a first conveyor system comprising

transfer means for conveying component carriers containing components from selected locations of the random storage facility to selected work stations and for conveying empty product carriers from selected locations of the random storage facility to selected work stations, and

a first line conveyor for conveying product carriers holding partially assembled products between the work stations, and

a second conveyor system comprising

a second line conveyor for conveying component carriers containing components from the source of components to the random storage facility and empty product carriers from the output station to the random storage facility, and

means arranged between the first and second line conveyors for conveying empty component carriers from the work stations to the source of components and for conveying product carriers holding fully assembled products from the work stations to the output stations.

In order that the invention may be more readily understood, an embodiment will now be described with reference to the accompanying drawings, in which:

Fig. 1 illustrates in diagrammatic form an automated product assembly system in accordance with the present invention;

Figs. 2 and 3 are plan views (partly sectioned) of four assembly lines of an assembly system of the type illustrated in Fig. 1 illustrating the relationship of the various components of these assembly lines;

Fig. 4 is a perspective view of portions of two lines in the direction of the arrow V in Fig. 3;

Fig. 5 is a plan view of a work station;

Fig. 6 is a plan view in more detail of a portion of an assembly line and the relationship between the components associated therewith;

Fig. 7 is an elevation view of the same region of an assembly line shown in plan view in Fig. 6; and

Figs. 8 and 9 are perspective views of two different types of carriers used to transport articles in an automated assembly system.

The various parts of an automated product assembly system in accordance with the invention include one or more sub-assembly or source areas wherein components required for insertion or attachment to the product are manufactured and loaded onto carriers of a first type. The components are loaded onto these carriers and transported by a first conveyor to the vicinity of an assembly area. A packaging and shipping area is connected to the final assembly area via the first conveyor, and completed products are loaded onto carriers of a second type (specifically, pallets) and transported by the first conveyor to the packaging and shipping area. As a product is packed for shipment, its carrier (pallet) becomes empty and is transported by the first conveyor back to the assembly area.

Thus two types of carrier approach the assembly area, carriers carrying components and empty pallets for products. These are directed to a random storage facility. The random storage facility includes one or more series of two-dimensional arrays of storage locations served by dedicated transporters (cranes) so that any carrier can be located in any one of the storage locations. Associated with each random storage facility is a different assembly line conveyor, and located along each assembly line conveyor is a series of work stations (or assembly stations). Since each array of storage locations is two-dimensional in nature and since the work stations are located along one dimension of this array, each array includes a row of storage locations (sometimes called ready locations) which are arranged to be co-planar with the assembly line conveyor. Transfer means are associated with each of these storage locations so that carriers can be transferred across the assembly line conveyor into a work station.

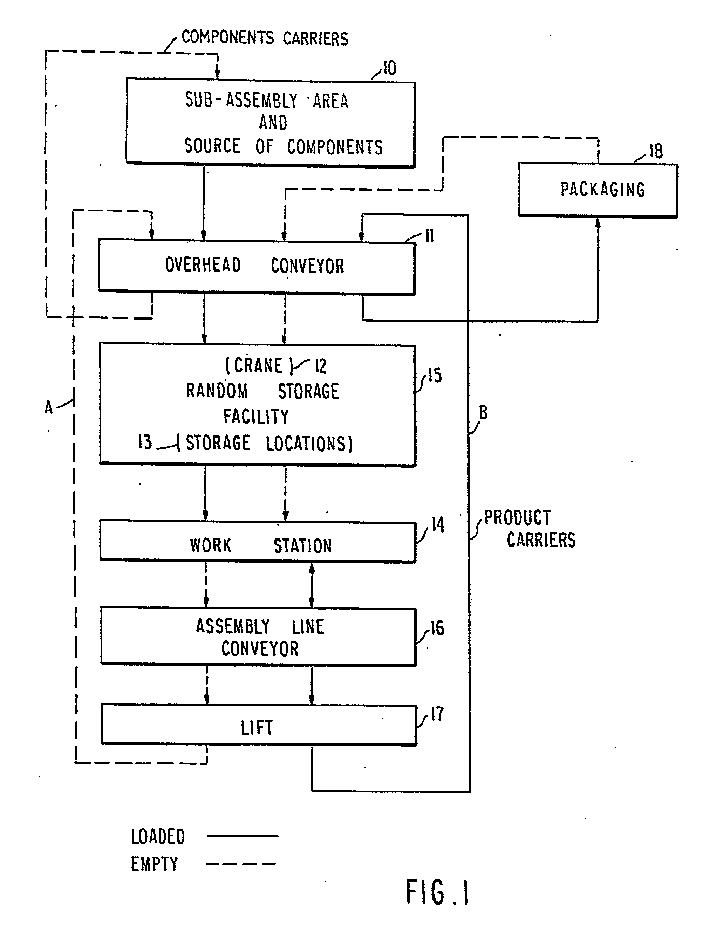

Fig. 1 shows diagrammatically the flow of different types of carriers through the various parts of an automated assembly system in accordance with the invention. The automated assembly system includes one or more sub-assembly areas 10, an overhead (or first) conveyor 11, and a random storage facility 15 including a crane 12 (or transport means) which can transport carriers to selected storage locations 13 in an array of storage locations in the random storage facility 15. A work station 14 is another element of the assembly system and is representative of all of the work stations. The assembly system also includes an assembly line conveyor 16, and a lift (or connecting conveyor) 17 connecting the assembly line conveyor 16 with the overhead conveyor 11. Finally, the assembly system includes a packaging and shipping area 18.

Two paths through the assembly system are illustrated, a first path A for carriers which are associated with components, and a second path B identified with carriers associated with work in process or completed products. As noted by the legend at the bottom of Fig. 1, a solid line identifies loaded carriers, whereas a dashed line identifies empty carriers.

The path A begins at a sub-assembly area 10 where a particular component is manufactured or at least loaded onto a carrier. Carriers loaded with the particular components are inserted into the overhead conveyor 11 where they are transported to the random storage facility 15. Each carrier is transferred by the crane 12 to a particular storage location 13. As will become apparent below, the crane 12 may actually move a carrier from one storage location 13 to another as required. Eventually, when the particular carrier is needed, it is transferred into a particular work station 14. The carrier will remain at the work station 14 until it is depleted of the components it had carried. The carrier is then ejected into the assembly line conveyor 16 where it is transported along the final assembly line, past one or more work stations, to the lift 17. The lift 17 transfers the carrier to the overhead conveyor 11 which eventually carries it back to a sub-assembly area 10 for reloading with more components.

Carriers (or pallets) associated with work in process and completed products travel along the path B. Empty pallets leave the packaging and shipping area 18 and are transported via the overhead conveyor 11 to the random storage facility 15. Empty product carriers are stacked at the packaging area 18 and are stored in the random storage facility 15 as a stack. At the random storage facility 15 the crane 12 will transport a stack of pallets to a particular storage location 13, and, as was the case with carriers for components, the stack of empty pallets may be transported from one storage location to another by the crane 12. Eventually, when an empty pallet is required at a work station 14, a stack of pallets is transferred into the work station. At this initial work station, pallets are unstacked and placed on the assembly line conveyor 16 one at a time. Each pallet carrying work in process, in contrast to the parts carriers, is transported by the assembly line conveyor 16 to a plurality of other work stations 14. Thus Fig. 1 shows by the double headed arrow that the pallet on which the product is built travels from work station to work station along the assembly line conveyor 16. When all the assembly steps have been completed, the carrier is transported by the assembly line conveyor 16 to the lift 17 where it is transferred to the overhead conveyor 11, and, on the overhead conveyor 11, back to the packaging and shipping area 18. Fig. 1 shows the different articles which are moving in the assembly line region. The movement of these various articles must be coordinated so that the movement of each article can occur without impeding other articles or their motion. At the same time the assembly line region should be geographically arranged to provide operator access, and at the same time be densely packed so as to be efficient from space consumption. The solution to this problem should also provide for flexibility in the movement sequences which can be implemented. It is this problem which is solved by an assembly system in accordance with the invention.

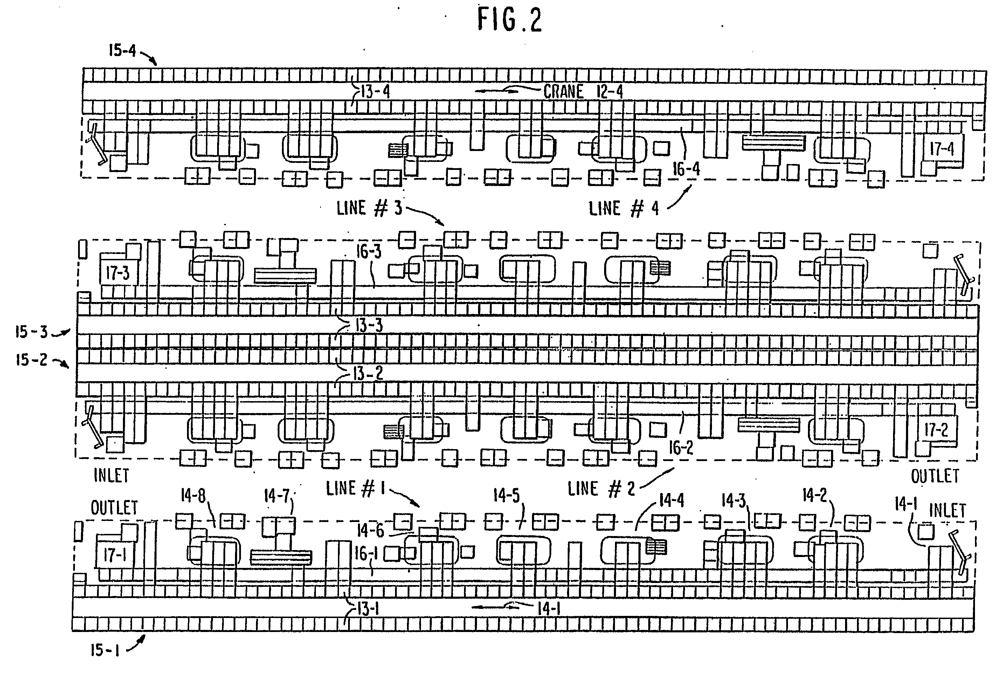

Fig. 2 is a plan view (partly in section) of four final assembly lines, lines #1-4 showing the random storage facility 15 for each line partially in section to reveal the path of a crane 12 in each storage facility 15. It should be apparent that one or more final assembly lines may be employed; in an embodiment of the invention actually constructed eight such final assembly lines are used and located in the pattern illustrated in Fig. 2 so that only four aisles between adjacent pairs of lines are needed.

Each final assembly line includes an assembly line conveyor 16 (and thus conveyors 16-1 to 16-4 are shown in Fig. 2 one for each of the lines 1 to 4). Each assembly line conveyor 16 has an inlet end and an outlet end, the inlets and outlines for lines 1 and 2 are specifically illustrated in Fig. 2. Located along each assembly line conveyor 16 is a series of work stations 14, thus assembly line 1 includes work stations 14-1 to 14-8, inclusive. Like the number of assembly lines, the number of work stations 14 is also variable within wide limits. Each work station 14 may be associated with a robot which is capable of manipulating components and work in process so as to perform one or more different assembly operations.

At the outlet end of each assembly line conveyor 16 is a coupling conveyor or lift 17. Articles transported to the lift 17 can be transported to the overhead conveyor (which is not illustrated in Fig. 2). Associated with each assembly line is a random storage facility 15 including a two-dimensional array of storage locations 13. Each array of storage locations 13 is served by a transport means or crane 12. Fig. 2 shows the path of each of the different cranes for the four assembly lines (although the crane itself is not illustrated in Fig. 2). Each crane 12 can communicate with the overhead conveyor for removing carriers from the overhead conveyor and place them in selected locations in an associated storage facility 15. In this fashion, carriers for components can be removed from the overhead conveyor and selectively located in the storage facility 15.

Fig. 2 illustrates two different relationships between adjacent assembly lines. Lines 1 and 2 show one of these relationships wherein the two lines are separated by an aisle available for operators to move about. Adjacent lines 2 and 3 illustrate the second relationship wherein the storage locations 13 of the two lines are directly adjacent each other.

As should be apparent from Fig. 2, the lines are not mirror images of each other in that the inlet to line 1 is adjacent the outlet of line 2, etc. The direction of movement of carriers (inlet to outlet) in one line (1, 2, 3 or 4) is opposite the direction of movement of carriers in the adjacent line (2, 1 or 3, 2 or 4, 3). This ensures that an operator's view of any line, while the operator is in the aisle, is identical. That is, the inlet is to the left and the outlet is to the right regardless of which line is being viewed from the associated aisle.

The Fig. 2 geography satisfies the twin criteria of space efficiency and work station access. All article movement into and out from each work station is concentrated on only one of the four sides of the station.

Thus by providing adequate spacing of work stations (in the direction of movement of the associated conveyor 16), the other three sides of the work station are accessible. Further, as shown in Fig. 2 only two aisles are required for four lines (or three aisles for six lines, four aisles for eight lines, etc.).

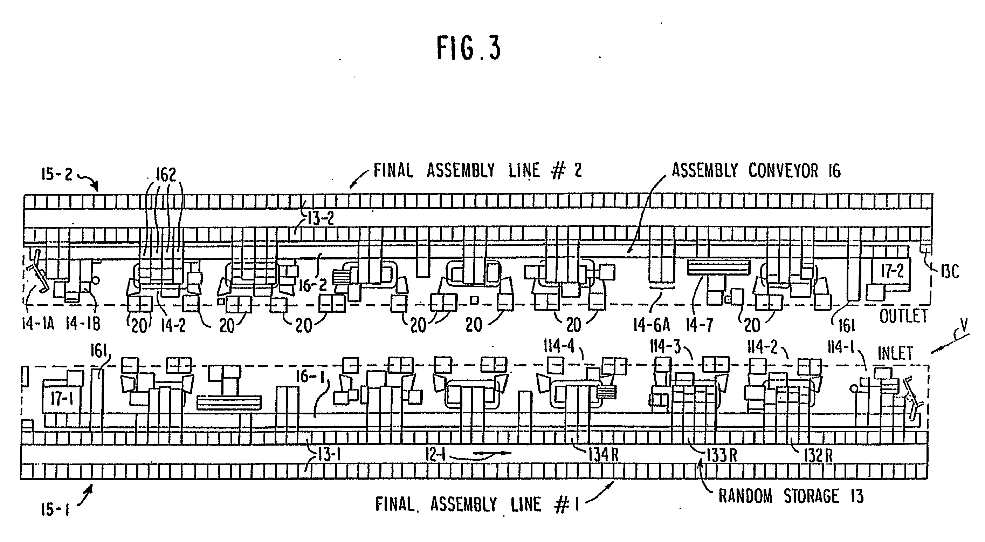

Fig. 3 is a more detailed view of final assembly lines 1 and 2 (of the four shown in Fig. 2). Fig. 3 illustrates (in addition to the parts already referred to) a reject spur 161 which is located after the final work station 14-7 in line 2. A controller 13C for each random storage facility 15 is illustrated as are various other controllers 20 associated with the work stations 14-2 to 14-8. In the embodiment of the invention actually constructed the controllers 20 comprise IBM Series 1 processors and/or IBM PC/XT processors with associated printers and keyboards. A work station 14-6A is provided for manual operations.

In the final assembly line 2, the first work station is identified as including robot manipulators 14-1A and 14-1B. The robot 14-1A is a non-programmable lift and carry tool whereas the robot 14-1B is a programmable pick and place robot arm. Each of the other automated work stations 14 includes a robot supported on a box frame which is cantilevered over the work station to perform assembly or test operations.

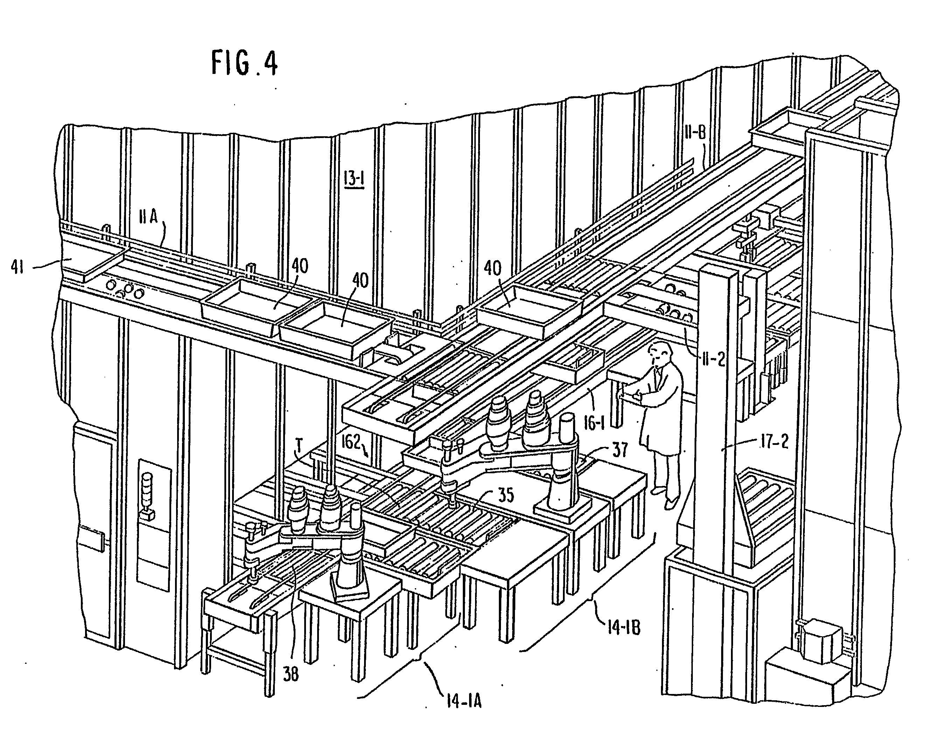

In order to see the relationship between the overhead conveyor (which is not shown in either of Figs. 2 or 3) and the series of work stations 14 and assembly conveyor line 16, reference should be made to Fig. 4. Fig. 4 is an isometric perspective view of assembly line 1 looking along the direction of the arrow V (Fig. 3).

Fig. 4 shows the inlet end of assembly line 1 and a portion of the outlet end of assembly line 2. More particularly, and in connection with assembly line 1, the work station 14-1, including robot manipulators 14-1A and 14-1B, is shown. The random storage locations 13-1 are also illustrated. As shown in Fig. 4, the ready row of the storage locations 13-1 co-planar with the assembly line conveyor 16-1 includes spurs 162 (or transverse conveyors) communicating with the assembly line conveyor 16-1 and capable of transferring carriers delivered by the crane 12-1 across the assembly line conveyor 16-1 into a carrier receiving area of an assembly station.

The assembly line conveyor 16-1 includes one or more padded chains which move in the direction from inlet to outlet and support carriers. Located between the transverse boundaries of the conveyor line 16-1 and normally below the lowermost level of a carrier supported on the chains is a set of powered rollers T with their axes extending longitudinally of the conveyor line so that powered rotation of the rollers T will impart motion transverse to the conveyor line. On either side of the conveyor line 16-1 aligned with the powered rollers T are other motion inducing conveyors forming an extension of the powered rollers. This is collectively referred to as transverse conveyor 162.

When a transfer of a carrier is to be made from a first to a second side of the conveyor line 16-1, the powered rollers T are raised slightly above the conveyor line 16-1 and energised. The conveyors in the extensions are also energised. A carrier on one such transverse conveyor 162 is thus propelled transverse to the conveyor line 16-1. As the carrier reaches the conveyor line 16-1, the raised powered rollers T support and propel the carrier across the conveyor line 16-1 to be received by the other conveyor forming a further extension leading to and forming a carrier receiving area such as 35. The transverse conveyor 162 is bidirectional so that a carrier can be transferred in either direction across the assembly line conveyor 16-1. The same transverse conveyor 162 can also be used to move a carrier from one extension conveyor onto (not across) the conveyor line 16-1 whereafter the carrier can be propelled toward the outlet of the line 16-1. It is this latter operation of the transverse conveyor 162 which is used to eject a carrier from a work station onto line 16-1 to move the carrier to the next work station or to lift 17-1.

Fig. 4 shows a carrier receiving area 35, in which a pallet from a stack of pallets delivered from the transverse conveyor 162 can be removed by the pick and place robot manipulator 14-1A and placed in the work area 38. The work area 38 is an in-line queue, and, when the conveyor 16-1 is powered, an empty pallet located in the area 38 will be conveyed toward the outlet end of the conveyor 16-1. The robot manipulator 14-1B can extract an initial component (such as a product base) from a carrier in the receiving area 35. The pallet on conveyor 16-1 is received in a work area (not shown) adjacent robot manipulator 14-1B. The robot manipulator 14-1B may also begin the assembly operation by inserting or attaching other components to the base. The product base as so modified is then located on a pallet in the work area. Thereafter, the pallet carrying the partly completed product is ejected onto the assembly line conveyor 16-1 for transfer to the second assembly station.

Fig. 4 also shows components of the overhead conveyor 11, including components 11A and 11B. Typical components carriers 40 are shown on the overhead conveyor 11, as well as a stack of empty (pallet) carriers 41. Fig. 4 also shows the lift 17-2, and a spur 11-2 of the overhead conveyor 11 which can be used to transfer articles from the lift 17-2 to the overhead conveyor 11. Not shown in Fig. 4 are pallets carrying completed products which also travel on the overhead conveyor 11, as well as carriers 40 which are loaded with components and destined for a particular random storage facility 15.

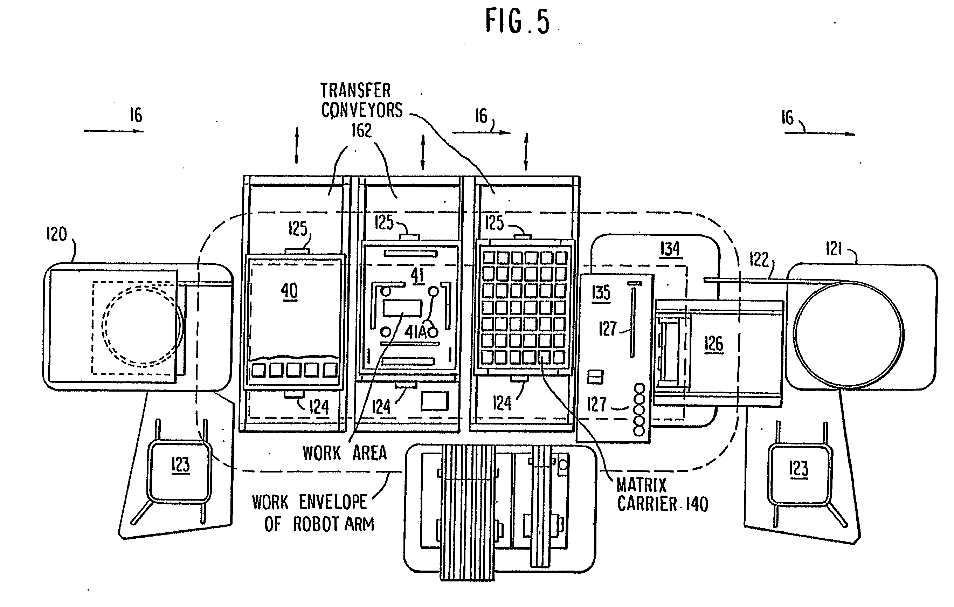

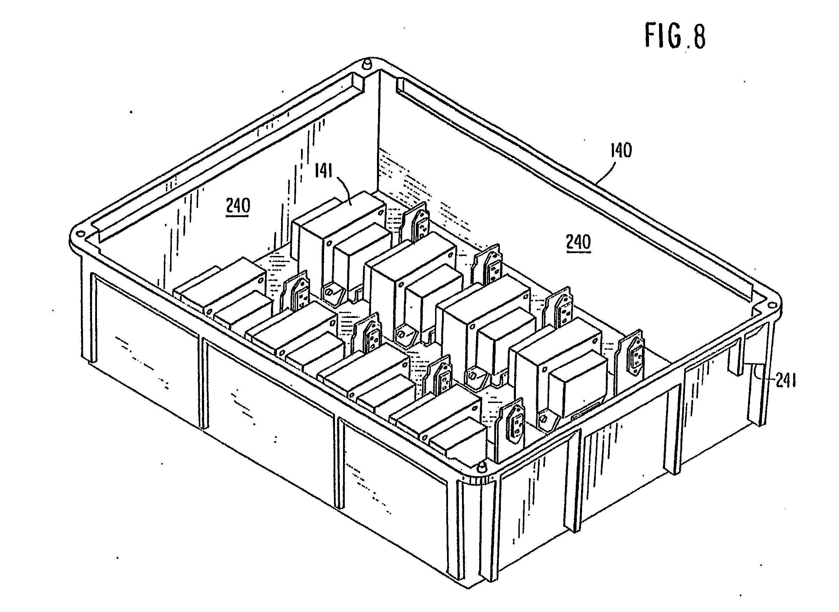

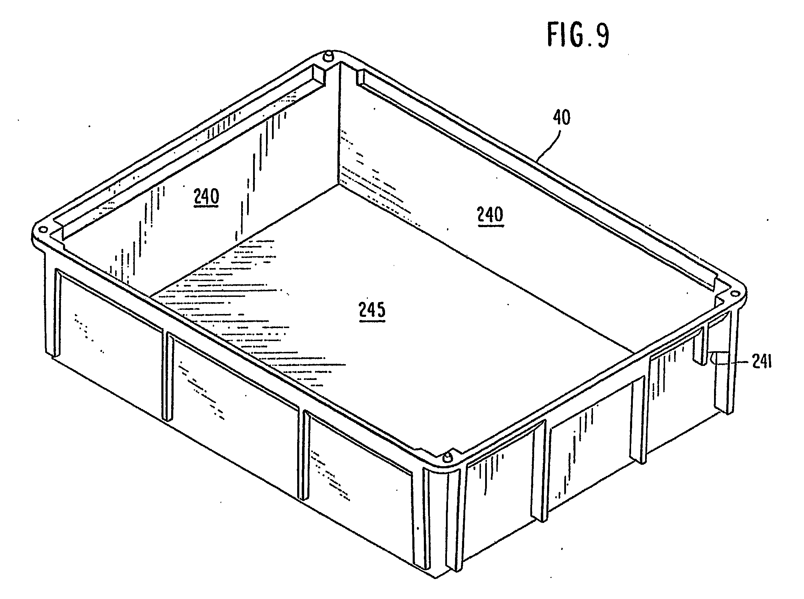

Fig. 5 shows a plan view, in more detail, of a typical work station 14. The arrows 16 identify the location and direction of motion of the associated assembly line conveyor 16. The transfer conveyors 162 each provide a path of motion (in the direction of the double headed arrows) for transferring a carrier from a particular (ready) storage location 13 in a storage facility 15 (which is on the opposite side of the conveyor 16 from the work station itself). As a carrier is transferred by the transfer conveyor 162 from a storage location 13 in a storage facility 15, it abuts against a front stop 124 which locates the carrier in a required position. Then a movable clamp 125 secures the carrier in the required position. Fig. 5 illustrates two different types of carrier for components, one shown at 40, and another, for matrix components, at 140 (these are shown in more detail in Figs. 8 and 9, respectively). The work envelope of the robot manipulator is shown within the dashed line. The robot arm is not shown in Fig. 5 to avoid obscuring the other components. The robot arm is supported on stands 123 and is cantilevered over the work area in which a pallet 41 is located. The pallet 41 is formed with a plurality of apertures 41A. These allow vertically moving rods (which register with the apertures 41A) to lift a partially completed product off the pallet 41 if the particular assembly operation carried out at the work station requires that capability. With this capability, work may be performed on both surfaces (top and bottom) of the product.

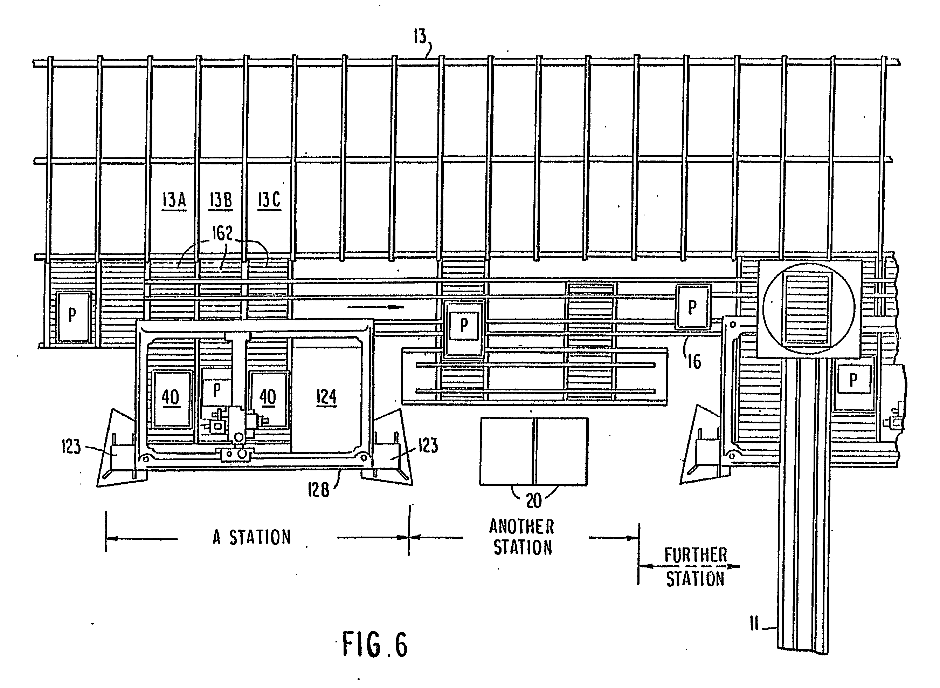

The typical work station shown in Fig. 5 includes vibratory bowl feeders 120 and 121 and a chute 122 for the bowl feeder 121. Work tables 134 and 135 are also provided for supporting a magazine feed 126 and tooling 127 with which the robot manipulator may cooperate to orient and locate various components on the partially completed workpiece. omponents for the vibratory feeders 120, 121 may be carried from the source 10 in a carrier by the overhead conveyor 11 to a storage location 13 in the random storage facility 15. When required the carrier is extracted from the storage location 13 and placed in one of the ready locations. From there the carrier is transferred into a carrier receiving area of a work station by the transfer conveyor 162. An operator manually transfers components from the carrier to the bowl feeders. The now empty carrier is moved (manually) to a conveyor re-entry point (see Fig. 6).

Fig. 6 is a plan view of the whole of two typical work stations 14 and of a portion of a further typical work station 14. The plan view shows the assembly line conveyor 16 and a portion of the overhead conveyor 11. As seen in Fig. 6 the storage locations 13 of the random storage facility 15 are located on the opposite side of the conveyor 16 from the various work stations 14. In Fig. 6 the frame 128 of the left hand work station is illustrated showing how the frame is cantilevered over the carrier receiving and work areas. Fig. 6 illustrates two components carriers 40, each in its respective carrier receiving area, and a pallet P located in the work area. Fig. 6 is convenient to show the transfer conveyors 162 and the manner in which they are associated with dedicated ready locations 13A-13C, respectively, in the random storage facility 15. Not seen in Fig. 6 is the crane 12 which can move carriers to selected storage locations 13 in the array of locations. Fig. 6 does not show the feeder bowls and the robot tooling which is illustrated in Fig. 5. The other wholly illustrated work station of Fig. 6 does not include a robot manipulator. This type of station is used to reintroduce carriers to the conveyor 16 in a controlled fashion.

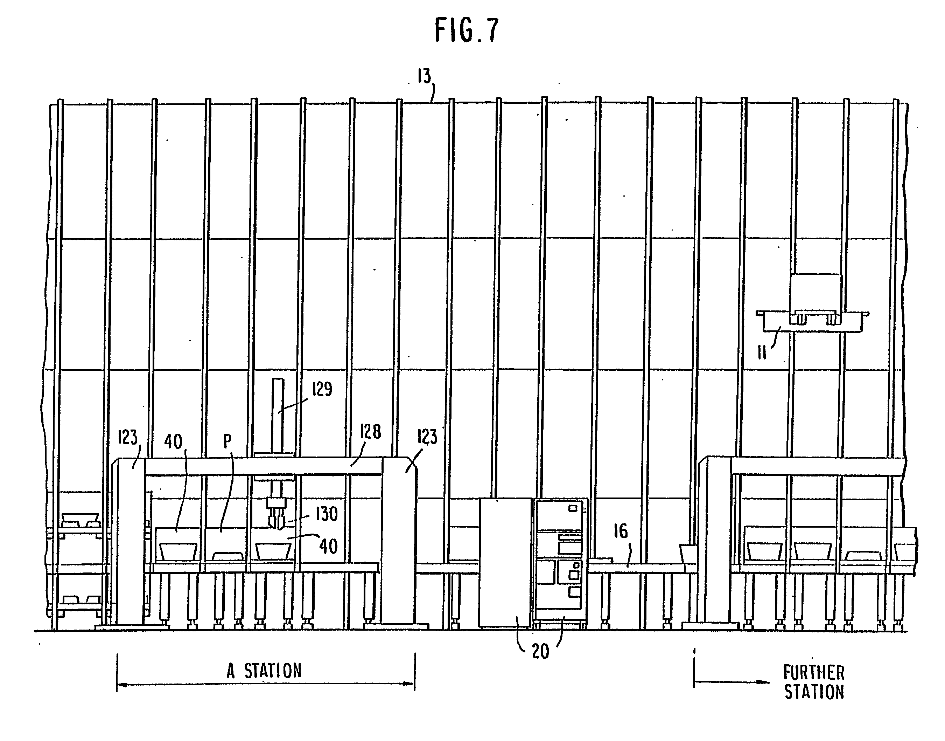

Fig. 7 is a front elevation of the same work stations whose plan view is shown in Fig. 6. The left hand work station shown in Fig. 7 includes the robot arms supports 123 supporting the frame 128 on which is supported a robot arm 129 at the end of which are attached robot grippers 130. In Fig. 7 the grippers 130 are located above a carrier 40 in one carrier receiving area. The other carrier receiving areas of the station contain another carrier 40 and a pallet P.

The relationships of the various stations to the assembly line conveyor 16 and the overhead conveyor 11 are also illustrated in Fig. 7. Fig. 7 illustrates how the product can be raised above the pallet P (by rods passing through the apertures 41A - see Fig. 5) to register the product relative to the robot arm. Thereafter the grippers can extract a component (from a carrier 40 or 140 or from some other source) and manipulate it for insertion into or attachment to the product. After all operations have been concluded the product is lowered back into the pallet P and the pallet is ejected onto the conveyor 16.

Fig. 9 shows a typical carrier 40 which is used for the supply of components to the various work stations. The carrier 40 includes a plurality of upstanding walls 240 surrounding an enclosed volume partially defined by a bottom wall 245. Located at one outside corner of the carrier 40 is a sloping surface 241 which forms a V-notch to cooperate with a cylindrical rod on front stop 124 (Fig. 5) for accurately locating the carrier 40 in a direction parallel to the line conveyor 16. Fig. 8 shows a similar carrier 140 with a matrix insert which orients and locates various components 141 in readily identifiable positions for the robot manipulator to pick. The matrix insert is located relative to the V-notch formed by the sloping surface 241 so that, when the carrier 140 is accurately located in a carrier receiving area at a station, the various components 141 are accurately locatable with respect to a fixed reference to facilitate the accurate picking of each of the components.

The assembly line conveyors 16 and the transfer conveyors 162 as well as the carrier receiving areas and work area consist of a padded chain conveyor system available from the Rapistan division of Lear-Siegler, Inc. under the name "Production Management System" (PMS). The particular random storage facility employed in an embodiment of the invention is available from Litton Industries.

Operation of the Automated Assembly System

Prior to commencing assembly operations using the automated assembly system described above, the storage location 13 of the random storage facility 15 adjacent each assembly line (1-4) are loaded with a stacks of empty pallets 41 (preferably in the vicinity of the inlet for each assembly line) and at least one carrier 40 of each different component which is normally supplied from a carrier. These component carriers 40 are located at ready locations in the random storage facility 15 adjacent the work stations 14 at which they will be used. More particularly, while extra supplies of pallets 41 and component carriers 40 may be distributed in various storage locations 13, a supply of empty pallets 41 is necessary in those storage locations 13 opposite the work station 14 at which empty pallets are required. Likewise, a loaded component carrier 40 is necessary in each ready storage location 13 of the random storage facility 15 directly opposite the carrier receiving area at which the particular component is needed.

The empty pallets 41 and the loaded component carriers 40 are then transferred across the assembly line 16 and located in the carrier receiving area at the work stations 14 where they will be used. Thereafter, additional stacks of empty pallets 41 may be moved by the crane 12 into the location from which the pallets were just removed so as to be ready for transfer when the pallet stack now at the work station is exhausted. Additional component carriers 40 can also be transported from their respective sources over the overhead conveyor to the crane 12 at which they can be properly located in the ready locations from which the component carriers have just been vacated. As a result each component carrier 40 located in a carrier receiving area of a work station 14 will have a corresponding loaded component carrier 40 in the ready storage location 13 of the storage facility 15 from which its predecessor had been removed.

At the first work station the product base is removed from a component carrier 40, assembly operations are carried out, and the base is finally placed on a pallet 41 which is transferred to the work area. The pallet can be ejected from the work station 14 onto the conveyor 16 where it can travel towards the next work station. Work piece loaded pallets 41 may be routed from one work station directly to the next, if the next work station has a free carrier receiving area for it. Preferably, however, work piece loaded pallets are not routed directly into a work station. Rather, a storage location 13 in the storage facility 15 directly opposite the work area of each work station is dedicated to a unit queue for each work station. This unit queue stores work in progress on a pallet until it is needed at the work station to which it can be directly transferred across the conveyor 16. In this fashion, a pallet carrying the product is transferred from the work area of one station, to the storage location 13 adjacent a next work station. Then, when needed, it is transferred across the assembly line conveyor 16 into the next work station. When the work has been completed the pallet is ejected out of the next work station and down the assembly line conveyor 16 to the next appropriate storage location 13 in the storage facility 15, etc.

Particularly, a typical pallet can travel from work station 114-1 to a ready storage location 13 such as 132R (see Fig. 3) even while work station 114-2 is occupied with a prior product. At such time as the prior product is ejected to conveyor 16 to clear work station 114-2 the product at ready storage location 132R is transferred into work station 114-2. Similar ready storage locations are provided for other work stations, see 133R (work station 114-3), 134R (work station 114-4), etc. The transverse transfer is made by the transfer conveyor 162, see Fig. 5.

After being ejected from the last work station in the line, the completed product on its pallet passes the reject station 161, to where it is transferred if previous testing indicates it is unacceptable. Alternatively, the product carrying pallet reaches the lift 17 and it is transferred thereby to the overhead conveyor 11. The product carrying pallet then is transferred along the overhead conveyor 11 to the packaging and shipping area 18. Empty pallets are returned along the overhead conveyor from the packaging and shipping area 18 to the random storage facility 15.

At the same time, as component carriers 40 at the various work stations are emptied, they are ejected onto the assembly line conveyor 16. These empty component carriers 40 proceed directly to the lift 17 and are transferred to the overhead conveyor 11.

They travel along the overhead conveyor 11 back to a respective sub-assembly area 10 where they can be again loaded with components. Full component carriers 40 travel from the respective source areas 10 over the overhead conveyor 11 and are directed to different storage locations 13 of the storage facility 15. At each storage location 13 the associated crane 12 extracts a carrier 40 from the conveyor 11 and selectively places it in the storage location 13. Typically, the appropriate storage location 13 will not be the ready storage location directly opposite the carrier receiving area of the work station for which the components within the carrier are destined. Typically there will be an intermediate transfer from a storage location into the ready storage location so that the carrier can be transferred directly across the assembly line conveyor 16 when it is needed at the work station.

Thus it should be apparent that the assembly line conveyor 16 transports carriers for components and for work in progress, the latter (41) in the full condition. Components carriers 40 travel on the assembly line conveyor 16 in an empty condition. In the full condition they are only transferred directly across the conveyor 16. The random storage facility 15 functions as a storage and transporting device eliminating the necessity for a transporter dedicated solely to components, while at the same time relieving the conveyor 16 from the burden of transporting components. By operating the random storage facility 15 with a queue of loaded components carriers 40 directly opposite the carrier receiving area at which they will be required, the components are always available. The crane 12 need only replace the transferred carrier 40 within the time it will take to deplete the contents of the transferred carrier.

Each of the carriers (pallets 41 for carrying work in progress and carrier 40 for components) includes a machine readable identification code. A control system (made up of a collection of interconnected computers, some of which are shown in the Figures) cooperates with the robotic work stations 14, the assembly line conveyor 16, the random storage facility 15 and the overhead conveyor 11 so as to maintain awareness of the position and load of each of the carriers. For example when a completed product is removed from a product carrier 41 at the packaging and shipping area 18, the control system identifies that particular carrier 41 as being an empty product carrier. This carrier 41 is then routed back to the random storage facility 15 by the first conveyor 11, and the identity of the carrier is used by the random storage facility 15 to select a suitable location in the array of locations 13 within which to store the particular carrier.

In this fashion, when a carrier of the required type is needed, the control system can identify which storage location in the array 13 includes an appropriate carrier and transfer it to the needed location.

Of course, if the particular carrier is transferred into the first work station, its characteristic changes in that, at least at the time it is ejected from the work station, it is no longer an empty carrier.

The control system receives information from each of the robotic work stations 14 on the condition of the product supported by the carrier 41 as the carrier is received by and ejected from each of the various work stations. When the product is substantially complete, one of the work stations comprises a test station wherein the product supported by the carrier is tested. The results of the test are recorded in association with the identification of the carrier, so that thereafter, as the carrier passes the reject station, it can be rejected out of the assembly line 16 if in fact the product supported by that particular carrier has not successfully passed the test. On the other hand, if the product has passed the test, the control system keeps track of the carrier as it is routed over the lift 17 to the overhead conveyor 11 and, on that conveyor, to the packaging and shipping area 18 where it is again unloaded to repeat the process. Preferably, product carriers 41 are not ejected from one work station 14 until such time as a ready storage location 13 or a carrier receiving area of the next work station is available. .

Components carriers 40 are also tracked as they move throughout the assembly system. As a component carrier 40 is loaded with a particular component, the control system associates the identification and perhaps the quantity of the components supported by the carrier. As a result, when the carrier reaches the random storage facility 15, an appropriate location in the array of locations 13 can be identified and the carrier stored therein. The carrier may be transferred out of that location into the queue for the particular component. When the carrier is needed at the appropriate work station, since it is already pre-positioned in the queue, the only movement necessary is to transfer it across the assembly line conveyor 16 into the appropriate carrier receiving area. This transfer is, however, tracked by the control system, and the control system is notified when the components in the carrier have been depleted. At that point, the control system ensures that the carrier is ejected onto the assembly line conveyor 16. This allows the control system to route the carrier back to an appropriate sub-assembly area 10 for reloading with additional component parts.

For those carriers which are moved by an operator, a reintroduce station is provided. At this station the carrier identification is read, and reintroduction is coordinated with other carriers on the conveyor 16. It should be apparent that carriers need not be dedicated to particular sub-assembly areas 10, since the control system can associate the identification of any carrier with any component.

## Claims

1. An automated product assembly system comprising

a plurality of work stations (14) for performing assembly operations on a product,
a source of components (10) for use in said assembly operations,
an output station (18) for receiving fully assembled products,
a plurality of component carriers (40) and product carriers (41),
a random storage facility (15) located adjacent to said work stations (14) and including storage locations for storing component carriers (40) holding components and empty product carriers (41) and transport means for transporting carriers into selected storage locations,
a first conveyor system comprising
transfer means (162) for conveying component carriers (40) containing components from selected locations of said random storage facility to selected work stations and for conveying empty product carriers (41) from selected locations of said random storage facility to selected work stations, and a first line conveyor (16) for conveying product carriers holding partially assembled products between said work stations, and
a second conveyor system comprising
a second line conveyor (11) for conveying component carriers (40) containing components from said source of components to said random storage facility and empty product carriers (41) from said output station to said random storage facility, and
means (17) arranged between said first and second line conveyors for conveying empty component carriers (40) from said work stations to said source of components and for conveying product carriers (14) holding fully assembled products from said work stations to said output stations.

2. An automated assembly system as claimed in Claim 1, characterised in that said conveyor system also transfers carriers (41) holding partially assembled products or fully assembled products from selected work stations (14) to said random storage facility (15).

3. An automated assembly system as claimed in Claim 1 or Claim 2, characterised in that random storage facility comprises a plurality of storage locations (13) arranged in arrays, each array being positioned adjacent to a respective work station (14).

4. An automated assembly system as claimed in any of the preceding claims, characterised in that said conveyor system comprises a line conveyor (16) extending adjacent to all said work stations for conveying product carriers (41) holding partially assembled products or fully assembled products between said work stations (14).

5. An automated assembly system as claimed in Claim 4, characterised in that said random storage facility (15) extends parallel to said line conveyor (16) and said transfer means transfers carriers (40, 41) from said random storage facility (15) to selected work stations (14) across said line conveyor (16).

6. An automated assembly system as claimed in any one of the preceding claims, characterised in that each work station (14) comprises eject means (162) for ejecting empty component carriers (40) and product carriers (14) holding fully assembled products to said conveyor system.

7. An automated assembly system as claimed in Claim 6, characterised in that said conveyor system comprises a second line conveyor (11) extending above said work stations (14).

8. An automated assembly system as claimed in Claim 7, characterised in that said line conveyor (11) conveys component carriers (40) holding components from said source of components (10) to said random storage facility (15) and empty product carriers (41) from said output station (18) to said random storage facility (15).

9. An automated product assembly system as claimed in any of the preceding claims, characterised in that each work station (14) comprises a work area for receiving carriers (40, 41) transferred from said random storage facility (15).

**Patentansprüche**

1. Automatisiertes Produktmontagesystem beinhaltend

eine Mehrzahl von Arbeitsplätzen (14) zur Ausführung von Montagevorgängen an einem Produkt,

eine Bauteilequelle (10) zur Verwendung bei den genannten Montagevorgängen,

einen Ausgabeplatz (18) zum Empfang vollständig montierter Produkte, eine Mehrzahl von Bauteileträgern (40) und Produktträgern (41),

eine neben den genannten Arbeitsplätzen (14) gelegene Random-Speicheranlage (15), welche Speicherplätze zum Speichern von Bauteileträgern (40) einschließt, die Bauteile und leere Produktträger (41) und Transportmittel zur Beförderung von Trägern in ausgewählte Speicherplätze enthalten,

ein erstes Beförderungssystem beinhaltend Übertragungsmittel (162) zur Beförderung von Bauteile enthaltenden Bauteileträgern (40) von ausgewählten Plätzen der genannten Random-Speicheranlage zu ausgewählten Arbeitsplätzen, und zur Beförderung von leeren Produktträgern (41) von ausgewählten Plätzen der genannten Random-Speicheranlage zu ausgewählten Arbeitsplätzen und

eine erste Bahnförderanlage (16) zur Beförderung von teilweise montierte Bauteile enthaltenden Produktträgern zwischen den genannten Arbeitsplätzen, und

ein zweites Beförderungssystem beinhaltend eine zweite Bahnförderanlage (11) zur Beförderung von Bauteile enthaltenden Bauteileträgern (40) von der genannten Bauteilequelle zu der genannten Random-Speicheranlage und von leeren Produktträgern (41) von dem Ausgabeplatz zu der genannten Random-Speicheranlage, und Mittel (17), die zwischen der ersten und zweiten Bahnförderanlage zur Beförderung von leeren Bauteileträgern (40) von den genannten Arbeitsplätzen zu der Bauteilequelle und zur Beförderung von vollständig montierte Produkte enthaltenden Produktträgern (14) von den genannten Arbeitsplätzen zu den Ausgabeplätzen angeordnet sind.

2. Ein nach Anspruch 1 beanspruchtes automatisiertes Montagesystem, dadurch gekennzeichnet, daß das genannte Beförderungssystem ebenfalls teilweise montierte Produkte oder vollständig montierte Produkte enthaltende Träger (41) von ausgewählten Arbeitsplätzen (14) zu der genannten Random-Speicheranlage (15) überführt.

3. Ein nach Anspruch 1 oder 2 beanspruchtes automatisiertes Montagesystem, dadurch gekennzeichnet, daß die Random-Speicheranlage eine Mehrzahl von in Reihen angeordneten Speicherplätzen (13) beinhaltet, wobei jede Reihe an den entsprechenden Arbeitsplatz (14) angrenzend angeordnet ist.

4. Ein nach einem der vorangehenden Ansprüche beanspruchtes automatisiertes Montagesystem, worin das genannte Beförderungssystem eine Bahnförderanlage (16) enthält, die bis zu allen Arbeitsplätzen angrenzend reicht, zur Beförderung zwischen den genannten Arbeitsplätzen (14) von teilweise oder vollständig montierte Produkte enthaltenden Produktträgern (41).

5. Ein nach Anspruch 4 beanspruchtes automatisiertes Montagesystem, dadurch gekennzeichnet, daß die genannte Random-Speicheranlage (15) bis zur genannten Bahnförderanlage (16) parallel reicht und die genannten Übertragungsmittel Träger (40, 41) von der genannten Random-Speicheranlage (15) bis zu den gewählten Arbeitsplätzen durch die genannte Bahnförderanlage (16) übertragen.

6. Ein nach einem der vorangehenden Ansprüche beanspruchtes automatisiertes Montagesystem, dadurch gekennzeichnet, daß jeder Arbeitsplatz (14) Auswerfmittel (162) zum Auswerfen der leeren Bauteileträger (40) und der vollständig montierte Produkte enthaltenden Produktträger (14) zum genannten Beförderungssystem umfaßt.

7. Ein nach Anspruch 6 beanspruchtes automatisiertes Montagesystem, dadurch gekennzeichnet, daß das genannte Beförderungssystem eine zweite bis über die genannten Arbeitsplätze (14) reichende Bahnförderanlage (11) umfaßt.

8. Ein nach Anspruch 7 beanspruchtes automatisiertes Montagesystem, dadurch gekennzeichnet, daß die genannte Bahnförderanlage (11) von der genannten Bauteilequelle (10) zu der genannten Random-Speicheranlage (15) Bauteile enthaltende Träger und leere Produktträger (41) von dem genannten Ausgabeplatz (18) zu der genannten Random-Speicheranlage (15) fördert.

9. Ein nach einem der vorangehenden Ansprüche beanspruchtes automatisiertes Produktmontagesystem, dadurch gekennzeichnet, daß jeder Arbeitsplatz (14) eine zum Empfang der von der genannten Random-Speicheranlage (15) übertragenen Träger (40, 41) Arbeitsfläche beinhaltet.

**Revendications**

1. Système d'assemblage automatique de produits comprenant

une pluralité de stations de travail (14) pour effectuer des opérations d'assemblage sur un produit,

une source de composants (10) à utiliser dans lesdites opérations d'assemblage,

une station de sortie (18) pour recevoir les produits complètement assemblés,

une pluralité d'éléments porteurs de composants (40) et d'éléments porteurs de produits (41),

une structure de stockage sélectif (15) placée près desdites stations de travail (14) et comportant des emplacements de stockage pour stocker des éléments porteurs de composants (40), qui contiennent des composants, et des éléments porteurs de produits (41) vides, et des moyens de transport pour amener les éléments porteurs à des emplacements de stockage choisis,

un premier système convoyeur comprenant des moyens de transfert (162) pour déplacer des éléments porteurs de composants (40), contenant des composants, d'emplacements choisis de ladite structure de stockage sélectif à des stations de travail choisies, et pour déplacer des éléments porteurs de produits (41) vides, d'emplacements choisis de ladite structure de stockage sélectif à des stations de travail choisies, et un premier convoyeur de ligne (16) pour transporter les éléments porteurs de produits contenant des produits partiellement assemblés, entre lesdites stations de travail, et

un deuxième système convoyeur comprenant un deuxième convoyeur de ligne (11) pour déplacer des éléments porteurs de composants (40), contenant des composants, de ladite source de composants à ladite structure de stockage sélectif, et pour déplacer des éléments porteurs de produits (41) vides, de ladite station de sortie à ladite structure de stockage sélectif, et

des moyens (17) prévus entre lesdits premier et deuxième convoyeurs de ligne pour transporter des éléments porteurs de composants (40) vides, desdites stations de travail à ladite source de composants, et pour transporter des éléments porteurs de produits (14) contenant des produits complètement assemblés, desdites stations de travail auxdites stations de sortie.

2. Système d'assemblage automatique suivant la revendication 1, caractérisé en ce que ledit système convoyeur transfère également des éléments porteurs (41) contenant des produits partiellement assemblés ou des produits complètement assemblés, de stations de travail choisies (14) à ladite structure de stockage sélectif (15).

3. Système d'assemblage automatique suivant la revendication 1 ou la revendication 2, caractérisé en ce que la structure de stockage sélectif comprend une pluralité d'emplacements de stockage (13) agencés en ensembles, chaque ensemble étant situé près d'une station de travail respective (14).

4. Système d'assemblage automatique suivant l'une quelconque des revendications précédentes, caractérisé en ce que ledit système convoyeur comprend un convoyeur de ligne (16) qui s'étend près de toutes les dites stations de travail pour transporter des éléments porteurs de produits (41) contenant des produits partiellement assemblés ou des produits complètement assemblés, entre lesdites stations de travail (14).

5. Système d'assemblage automatique suivant la revendication 4, caractérisé en ce que ladite structure de stockage sélectif (15) s'étend parallèlement au dit convoyeur de ligne (16), et lesdits moyens de transfert transfèrent des éléments porteurs (40, 41) de ladite structure de stockage sélectif (15) à des stations de travail choisies (14), d'un côté à l'autre dudit convoyeur de ligne (16).

6. Système d'assemblage automatique suivant l'une quelconque des revendications précédentes, caractérisé en ce que chaque station de travail (14) comprend des moyens d'éjection (162) pour éjecter les éléments porteurs de composants (40) vides et les éléments porteurs de produits (14) contenant des produits complètement assemblés, vers ledit système convoyeur.

7. Système d'assemblage automatique suivant la revendication 6, caractérisé en ce que ledit système convoyeur comprend un deuxième convoyeur de ligne (11) s'étendant au-dessus desdites stations de travail (14).

8. Système d'assemblage automatique suivant la revendication 7, caractérisé en ce que ledit convoyeur de ligne (11) transporte des éléments porteurs de composants (40) contenant des composants, de ladite source de composants (10) à ladite structure de stockage sélectif (15), et transporte des éléments porteurs de produits (41) vides, de ladite station de sortie (18) à ladite structure de stockage sélectif (15).

9. Système automatique d'assemblage de produits suivant l'une quelconque des revendications précédentes, caractérisé en ce que chaque station de travail (14) comprend une zone de travail pour recevoir les éléments porteurs (40, 41) transférés à partir de ladite structure de stockage sélectif (15).

FIG. 1

FIG.2

# FIG.3

FINAL ASSEMBLY LINE # 2

ASSEMBLY CONVEYOR 16

15-2

162

13-2

16-2

17-2

13C

14-1A 14-1B  20  14-2  20  20  20  20  20  14-6A 14-7  20  161  OUTLET

V

161

114-4  114-3  114-2  114-1  INLET

17-1

16-1

13-1

12-1

134R

133R

132R

15-1

FINAL ASSEMBLY LINE #1

RANDOM STORAGE 13

EP 0 201 262 B1

# FIG.4

EP 0 201 262 B1

FIG. 5

FIG.6

EP 0 201 262 B1

# FIG.7

EP 0 201 262 B1

A STATION

FURTHER
STATION

FIG. 8

FIG.9

EP 0 201 262 B1